(19) Europäisches Patentamt

European Patent Office

Office européen des brevets

(11) **EP 1 251 429 A1**

(12) **EUROPÄISCHE PATENTANMELDUNG**

(43) Veröffentlichungstag:
23.10.2002 Patentblatt 2002/43

(51) Int Cl.⁷: **G06F 9/45**, G06F 9/44,
G06F 11/18

(21) Anmeldenummer: 01810384.6

(22) Anmeldetag: 19.04.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ABB Schweiz AG**
**5400 Baden (CH)**

(72) Erfinder: **Layes, Michael**
**79725 Laufenburg (DE)**

(74) Vertreter: **ABB Patent Attorneys**
**c/o ABB Schweiz AG**
**Brown Boveri Strasse 6**
**5400 Baden (CH)**

(54) **Erzeugung von redundanten Computerprogrammmodulen**

(57) Erfindungsgemäss werden n redundante Computerprogrammmodule für n redundante Datenverarbeitungseinheiten (11,12,13) automatisch erzeugt. Das erfindungsgemässe Verfahren geht von einem generischen Computerprogrammmodul aus, welches Programmanweisungen mit parametrisierten Programmvariablen aufweist, wobei

■ ein Wert eines Parameters k mit 1≤k≤n bestimmt wird, und
■ ein k-tes redundantes Computerprogrammmodul erzeugt wird, indem die parametrisierten Programmvariablen nach Massgabe des Wertes von k automatisch durch nichtparametrisierte Programmvariablen ersetzt werden.

**Beschreibung**

**Technisches Gebiet**

Die Erfindung bezieht sich auf das Gebiet der Programmierung von Leittechnikgeräten. Sie bezieht sich auf ein Verfahren zur Erzeugung von redundanten Computerprogrammmodulen gemäss dem Oberbegriff des Patentanspruches 1, sowie auf in dem Verfahren verwendete Computerprogrammprodukte.

**Stand der Technik**

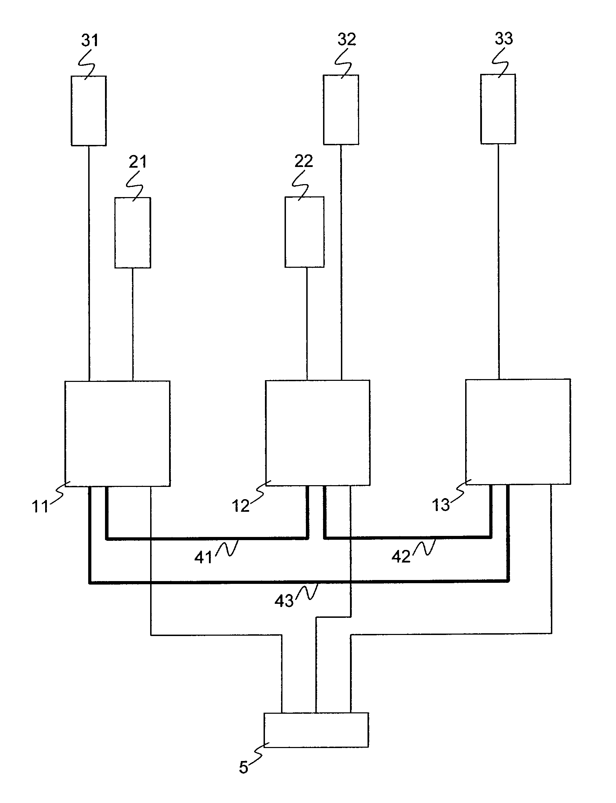

Redundante Leittechnikgeräte und -systeme werden in Anwendungen mit hohen Anforderungen bezüglich Sicherheit oder Verfügbarkeit eingesetzt. Darin werden Datenverarbeitungseinheiten und/oder Sensoren n-fach redundant ausgeführt, in der Regel zwei- oder dreifach redundant. Figur 1 zeigt schematisch eine bekannte Struktur eines redundanten Leitsystems mit dreifachredundanten Datenverarbeitungseinheiten 11,12,13, zweifachredundanten ersten Sensoren 21,22 und dreifachredundanten zweiten Sensoren 31,32,33. Die beiden ersten Sensoren messen im wesentlichen dieselbe physikalische Grösse einer Anlage, beispielsweise eine Temperatur, einen Druck, einen Massenstrom etc.... Gleiches gilt für die drei zweiten Sensoren. Sensorwerte werden in bekannter Weise über eine sogenannte Messkette an eine oder mehrere redundante Datenverarbeitungseinheiten oder Leitrechner übermittelt. In der Messkette werden Messwerte typischerweise digitalisiert, übermittelt, skaliert und eine Amplitude der Messwerte eventuell diskretisiert. Abweichungen zwischen redundanten Messwerten einer physikalischen Grösse deuten auf Fehlfunktionen von Sensoren hin und werden durch Vergleich der Messwerte in den Datenverarbeitungseinheiten 11,12,13 ermittelt. In den Datenverarbeitungseinheiten 11,12,13 ablaufende Programmmodule realisieren Steuerungs-, Regelungs- und Schutzfunktionen, welche einen Betrieb der Anlage gewährleisten. Die Datenverarbeitungseinheiten 11,12,13 steuern Hardwareeinheiten 5. Hardwareeinheiten 5 sind Aktoren oder Schutzgeräte, welche mehrere Aktoren ansteuern. Aktoren sind beispielsweise Motoren oder Ventile. Aktoren oder Schutzgeräte sind entweder redundant ausgeführt, oder werden durch eine sogenannte "2 aus 3"-Logik angesteuert. Das heisst, ein Steuerbefehl wird nur ausgeführt, falls mindestens zwei von drei redundanten Datenverarbeitungseinheiten 11,12,13 denselben Steuerbefehl erzeugen. Eine Überprüfung von Steuerbefehlen gemäss der "2 aus 3"-Logik geschieht beispielsweise in einem Schutzgerät oder in den redundanten Datenverarbeitungseinheiten 11,12,13 selber, indem diese die entsprechenden Steuerbefehle über Kommunikationsverbindungen 41,42,43 untereinander austauschen.

Die in den Datenverarbeitungseinheiten 11,12,13 ablaufenden Programmmodule sind redundant, in dem Sinne, dass sie dieselben Funktionen und Operationen parallel zueinander und im wesentlichen gleichzeitig ausführen und bei korrektem Funktionieren des Leitsystems übereinstimmende Sensorwerte erhalten und übereinstimmende Steuerbefehle erzeugen. Die redundanten Programmmodule unterscheiden sich jedoch bezüglich Referenzen oder Programmvariablen, welche sich auf Sensorsignale, Signale benachbarter Datenverarbeitungseinheiten oder auf Steuersignale beziehen.

Gemäss dem Stand der Technik werden die redundanten Programmmodule jeweils einer redundanten Datenverarbeitungseinheit 11,12,13 zugeordnet und in entsprechenden separaten Versionen von Hand erstellt und unterhalten. Es werden also beispielsweise drei Programmmodule mit ähnlicher Struktur, jedoch mit unterschiedlichen Referenzen zu Messwerteingängen und mit Datenverarbeitungseinheiten mit unterschiedlichen Hardwareadressen erstellt. Dadurch wird eine konsistente Programmierung und Abänderung redundanter Programmmodule aufwendig und fehleranfällig.

**Darstellung der Erfindung**

Es ist deshalb Aufgabe der Erfindung, ein Verfahren und ein Computerprogrammprodukt zur Erzeugung von redundanten Computerprogrammmodulen der eingangs genannten Art zu schaffen, welche die oben genannten Nachteile beheben.

Diese Aufgabe lösen ein Verfahren und ein Computerprogrammprodukt zur Erzeugung von redundanten Computerprogrammmodulen mit den Merkmalen der Patentansprüche 1 und 5, sowie ein Computerprogrammprodukt zur Repräsentation eines generischen Computerprogrammmoduls mit den Merkmalen des Patentanspruches 6.

Das erfindungsgemässe Verfahren geht von einem generischen Computerprogrammmodul aus, welches Programmanweisungen mit parametrisierten Programmvariablen aufweist, wobei

- ■　ein Wert eines Parameters k mit $1 \leq k \leq n$ bestimmt wird, und
- ■　ein k-tes redundantes Computerprogrammmodul erzeugt wird, indem die parametrisierten Programmvariablen nach Massgabe des Wertes von k automatisch durch nichtparametrisierte Programmvariablen ersetzt werden.

Dadurch wird es möglich, dass nur ein einziges generisches Computerprogrammmodul erstellt und unterhalten werden muss. Die redundanten Computerprogrammmodule werden bei Bedarf automatisch erzeugt, so dass eine Konsistenz der redundanten Computerprogrammmodule automatisch gewährleistet wird. Bei einem dreifachredundanten System wird dadurch der Programmieraufwand auf ein Drittel reduziert.

Ein Computerprogrammprodukt zur Erzeugung von redundanten Computerprogrammmodulen gemäss der Erfindung ist, gegebenenfalls nach einer Kompilaton oder Übersetzung, in einen internen Speicher eines digitalen Datenverarbeitungsmittels ladbar, und weist Computerprogrammcodemittel auf, die, wenn sie in einer Datenverarbeitungseinheit geladen und ausgeführt werden, die Datenverarbeitungseinheit zum Lesen eines generischen Computerprogrammmoduls und zum Erzeugen eines redundanten Computerprogrammmoduls bringen. Das erste Computerprogrammprodukt weist vorzugsweise ein computerlesbares Medium mit einem darauf gespeicherten Computerprogramm zur Ausführung des Verfahrens gemäss der Erfindung auf.

Ein Computerprogrammprodukt zur Repräsentation eines generischen Computerprogrammmoduls gemäss der Erfindung ist in einen internen Speicher eines digitalen Datenverarbeitungsmittels ladbar, und weist Computerprogrammcodemittel auf, welche parametrisierbare Programmvariablen repräsentieren, die zur Erzeugung mindestens eines von mehreren redundanten Computerprogrammmodulen nach Massgabe eines Parameters durch nichtparametrisierte Programmvariablen automatisch ersetzbar sind.

Weitere bevorzugte Ausführungsformen gehen aus den abhängigen Patentansprüchen hervor.

**Kurze Beschreibung der Zeichnungen**

Im folgenden wird die Erfindung anhand von bevorzugten Ausführungsbeispielen und den beiliegenden Zeichnungen näher erläutert. Die einzige Figur zeigt schematisch eine bekannte Struktur eines redundanten Leitsystems. Die in der Zeichnung verwendeten Bezugszeichen und deren Bedeutung sind in der Bezugszeichenliste zusammengefasst aufgelistet.

**Wege zur Ausführung der Erfindung**

In der eingangs beschriebenen Struktur eines Leitsystems gemäss Figur 1 wird auf einer ersten Datenverarbeitungseinheit 11 ein erstes redundantes Computerprogrammmodul ausgeführt, auf der zweiten Datenverarbeitungseinheit 12 ein zweites redundantes Computerprogrammmodul und auf der dritten Datenverarbeitungseinheit 13 ein drittes redundantes Computerprogrammmodul. Der Kürze halber werden im folgenden "redundante Computerprogrammmodule" als "Module" bezeichnet.

Die drei Module weisen bezüglich dreifachredundanter Funktionen im wesentlichen dieselbe Funktionalität auf, verarbeiten und erzeugen dabei jedoch unterschiedliche Programmvariablen. Programmvariablen stellen dabei Variablen im üblichen Sinne sowie auch Referenzen zu Messwerten, Kommunikationssignalen und/oder Steuerbefehlen respektive Stellwerten dar. Beispielsweise seien Messwerte einer Gruppe von zweiten Sensoren 31,32,33 unter Programmvariablen mit Namen

- ■ P_myPump12 für einen Messwert eines ersten zweiten Sensors 31,
- ■ P_myPump23 für einen Messwert eines zweiten zweiten Sensors 32,
- ■ P_myPump34 für einen Messwert eines dritten zweiten Sensors 33 ansprechbar.

Weiter werde ein bestimmter Wert, der in jedem der drei Module redundant berechnet wird, zur Kontrolle mittels der Kommunikationsverbindungen 41,42,43 zwischen den Modulen ausgetauscht. Der Wert muss dazu in einem sendenden Modul einer Programmvariablen zugewiesen werden und in einem empfangenden Modul aus einer Programmvariablen gelesen werden. Dazu werden die Kommunikationsverbindungen in bekannter Weise derart konfiguriert, dass ein Wert, der in einem ersten Modul respektive einer zugeordneten Datenverarbeitungseinheit berechnet oder gemessen wird und einer ersten Programmvariable zugewiesen wird, durch die Kommunikationsverbindung an eine zweite Datenverarbeitungseinheit übertragen wird, und dort als Wert einer zweiten Programmvariablen weiterverarbeitet wird.

Je nachdem, welches Modul das sendende respektive empfangende ist, tragen die entsprechenden Programmvariablen unterschiedliche Namen. Beispielsweise ist ein bestimmter erster Wert, der in mehreren Modulen redundant berechnet wird,

- ■ im ersten Modul mit der Programmvariablen CPU1_Value25,
- ■ im zweiten Modul mit der Programmvariablen CPU2_Value25, und
- ■ im dritten Modul mit der Programmvariablen CPU3_Value25 bezeichnet und ist im ersten Modul
- ■ der entsprechende Wert des zweiten Moduls mit der Programmvariablen CPU2_CPU1_Value25 und

■    der entsprechende Wert des dritten Moduls mit der Programmvariablen CPU3_CPU1_Value25 bezeichnet.

Analog werden Werte des ersten respektive dritten Moduls im zweiten Modul mit CPU1_CPU2_Value25 respektive CPU3_CPU2_Value25 und Werte des ersten respektive zweiten Moduls im dritten Modul mit CPU1_CPU3_Value25 respektive CPU2_CPU3_Value25 bezeichnet.

Jedes der Module weise einen Programmabschnitt auf, in welchem der erste Wert, wie er im Modul selber bestimmt wurde, mit den entsprechenden Werten aus den anderen Modulen verglichen wird. Im ersten Modul referenziert dieser Programmabschnitt somit Programmvariablen

CPU1_Value25, CPU2_CPU1_Value25 und CPU3_CPU1_Value25,

im zweiten Modul referenziert ein redundanter Programmabschnitt

CPU2_Value25, CPU1_CPU2_Value25 und CPU3_CPU2_Value25, und

im dritten Modul referenziert ein redundanter Programmabschnitt

CPU3_Value25, CPU1_CPU3_Value25 und CPU2_CPU3_Value25.

Eine Programmierung von verschiedenen Versionen mit derart variierten Programmvariablen ist fehleranfällig. Durch die automatisierte Erzeugung von verschiedenen Programmversionen für die redundanten Datenverarbeitungseinheiten 11,12,13 entfallen entsprechende Programmierfehler.

Erfindungsgemäss werden Programmvariablen in einem generischen Computerprogrammmodul parametrisiert dargestellt. Das heisst, dass solche parametrisierten Programmvariablen durch Parameter ausgedrückt werden respektive durch Parameter definiert sind. Nach Massgabe eines oder mehrerer Parameter wird aus einer parametrisierten Programmvariable eine konkrete oder nichtparametrisierte Programmvariable in einem Modul gebildet. Nichtparametrisierte Programmvariablen in unterschiedlichen Modulen, welche aus derselben parametrisierten Programmvariablen hervorgegangen sind, beziehen sich in der Regel auf unterschiedliche Grössen. Eine nichtparametrisierte Programmvariable bezieht sich beispielsweise auf ein konkretes Sensorsignal, ein konkretes Stellsignal für einen Aktor oder ein konkretes Kommunikationssignal zu einer anderen Datenverarbeitungseinheit. "Konkret" bedeutet in diesem Zusammenhang, dass sich die Grösse auf eine bestimmte physikalisch vorhandene Einheit bezieht, beispielsweise auf einen ersten Sensor oder eine zweite Datenverarbeitungseinheit. Im Gegensatz dazu bezieht sich eine parametrisierte Programmvariable je nach Zusammenhang auf unterschiedliche physikalische Einheiten, wobei diese Einheiten in der Regel zueinander redundant sind.

Das generische Computerprogrammmodul drückt eine gemeinsame Funktionalität von redundanten Computerprogrammmodulen respektive Modulen aus.

Für die folgenden Beispiele wird die Parametrisierung anhand der folgenden Syntax definiert. Es sind jedoch beliebige andere syntaktische und semantische Konventionen zur Syntaxdefinition möglich, welche ebenfalls die erfinderische Idee realisieren.

Referenzen auf Parameter werden durch spitze Klammern '<' und '>' eingerahmt. Mit dem Begriff "Parameter" sind im folgenden der Kürze halber, wo nicht anders spezifiziert, die Parameter der Parametrierung von Programmvariablen im Sinne der Erfindung gemeint, im Gegensatz zu "Parametern" von Subroutinen- oder Funktionsaufrufen, wie sie in höheren Programmiersprachen verwendet werden. Indexierte Datenfelder (arrays) werden mit ekkigen Klammern '[' und ']' bezeichnet.

Es bezeichnen

':='    einen Zuweisungsoperator, der einer Variable einen Wert zuweist
'='    einen logischen Gleichheitsoperator,
'#'    einen logischen Ungleichheitsoperator
'&'    einen Operator zur Aneinanderreihung von Zeichenketten
'+'    einen Additionsoperator
'*'    einen Multiplikationsoperator

Wobei die Operatoren mit zunehmender Präzedenz geordnet sind, das heisst, dass beispielsweise eine Multiplikation vor einer Addition ausgeführt wird.

Alle übrigen Zeichen bezeichnen Zeichenketten (strings) oder Zahlen. Die Operatoren implizieren eine automatische Konversion von Datentypen ihrer Operanden. Beispielsweise bedeutet

$$var1 := pre \& 10 + 2$$

dass zuerst 10 plus 2 berechnet wird und das Resultat als Zeichenkette mit der Zeichenkette 'pre' verbunden wird, so dass die Programmvariable var1 als Wert die Zeichenkette 'pre12' erhält.

Im Ausdruck

$$var2 := (<var1>=1)+1$$

wird mit den spitzen Klammern bewirkt, dass der Wert der Programmvariable var1 und nicht die Zeichenkette 'var1' evaluiert wird. Falls dieser Wert gleich der Zahl 1 ist oder eine Zeichenkette ist, die als Zahl 1 interpretierbar ist, nimmt der Ausdruck in runden Klammern den Wert 1 an, so dass var2 den Wert 2 erhält. Andernfalls nimmt der Ausdruck in runden Klammern den Wert null an und erhält var2 den Wert 1.

Bei der Parametrisierung der Programmvariablen eines Moduls werden vorzugsweise Hilfsvariablen verwendet, welche als Parameter anderer Variablen benutzt werden. Es gebe ein Parameter k mit $1{\leq}k{\leq}3$ an, welches Modul von drei redundanten Computerprogrammmodulen zu generieren ist. Dann werden beispielsweise folgende Hilfsvariablen respektive Hilfsparameter bestimmt:

```
CPU_This :=    k
CPU_Low :=     (<CPU_This>=1)+1
CPU_High :=    (<CPU_This>#3)+2
```

In den beiden unteren Beispielen sind die rechts des Zuweisungsoperators stehenden Ausdrücke parametrisierte Ausdrücke, mit einem Parameter CPU_This. Bei einer Evaluation der Ausdrücke wird der Parameter durch einen Wert des Parameters ersetzt. Es ergeben sich für die möglichen Werte von k entsprechende Werte von CPU_This, CPU_Low und CPU_High gemäss der folgenden Tabelle:

| k | 1 | 2 | 3 |
|---|---|---|---|
| CPU_This | 1 | 2 | 3 |
| CPU_Low | 2 | 1 | 1 |
| CPU_High | 3 | 3 | 2 |

Erfindungsgemäss parametrisierte Programmvariable, welche Messwerte bezeichnen, werden beispielsweise folgendermassen ausgedrückt:

P_measurement := P_myPump & 10 * <CPU_This> + <CPU_This> + 1

Hier ist der rechts des Zuweisungsoperators stehende Ausdruck eine parametrisierte Programmvariable. Für einen Wert 1 des Parameters CPU_This wird diese parametrisierte Programmvariable durch eine nichtparametrisierte Programmvariable P_myPump12 ersetzt.

Falls die Verarbeitung der Module auf den Datenverarbeitungseinheiten 11,12,13 eine Auswertung von Feldern von Parametern unterstützt, so werden Messwerte in den Datenverarbeitungseinheiten wahlweise durch beispielsweise

P_measurement := P_myPump[<CPU_This>] referenziert, wobei Werte des Parameterfeldes P_myPump als Zeichenkettenkonstanten vordefiniert sind:

```
P_myPump[1] :=    P_myPump12
P_myPump[2] :=    P_myPump23
P_myPump[3] :=    P_myPump34
```

Für das erste Modul mit k=1 wird der Wert der Programmvariablen P_measurement zu P_myPump12, für das zweite Modul mit k=2 wird der Wert von P_measurement zu P_myPump23, etc. Dies bewirkt bei einer Ausführung der Module auf ihren zugeordneten Datenverarbeitungseinheiten 11,12,13, dass jedes Modul auf einen anderen, zugeordneten redundanten Sensor zugreift.

Die Unterstützung der Auswertung von Feldern von Parametern erlaubt es auch, Programmvariablen zu parametrieren, welche nicht, wie oben gezeigt, gemäss einer Numerierungskonvention benannt sind. Beispielsweise werden vorgegebene Namen wie

P_myPump_Oben,
P_myPump_Mitte,
P_myPump_Unten

durch Zuweisung an Elemente eines Arrays in folgender Weise parametriert:

```
P_myPump[1] :=    P_myPump_Oben
P_myPump[2] :=    P_myPump_Mitte
```

P_myPump[3] :=     P_myPump_Unten

Erfindungsgemäss parametrisierte Programmvariable, welche über die Kommunikationsverbindungen 41,42,43 ausgetauscht werden, werden beispielsweise folgendermassen ausgedrückt:

from_Low :=          CPU<CPU_Low>_CPU<CPU_This>_Value25
from_High :=         CPU<CPU_High>_CPU<CPU_This>_Value25
to_Low_ _High :=     CPU<CPU_This>_Value25

Für das erste Modul werden diese drei parametrisierten Programmvariablen durch die folgenden nicht parametrisierten Programmvariablen
     CPU2_CPU1_Value25,
     CPU3_CPU1_Value25 und
     CPU1_Value25
ersetzt.

Ein generisches Computerprogrammmodul mit erfindungsgemäss parametrisierten Programmvariablen weist vorzugsweise einen ersten Programmabschnitt auf, in welchem Programmvariablen, im Folgenden als Zwischenvariablen bezeichnet, wie oben beschrieben einen in parametrisierter Form ausgedrückten Wert zugewiesen bekommen. Solche Zwischenvariablen sind also P_measurement, from_Low, from_High, to_Low_ _High. In weiteren Programmabschnitten werden die Zwischenvariablen zur Programmierung der Regelungs- Steuerungs- respektive Schutzfunktionen des Leitsystems verwendet. Die Programmierung geschieht in textueller Form oder in einer gemischt textuell/graphischen Form, wie sie von sogenannten Funktionsplansprachen allgemein bekannt ist. Der folgende Programmausschnitt zeigt beispielhaft einen Teil eines generische Computerprogrammmoduls. Ein erster Abschnitt wird nur einmal ausgeführt und führt in erfindungsgemässer Weise zur Bestimmung der nicht parametrisierten Programmvariablen. Ein zweiter Programmabschnitt wird bei einer Regelung respektive Steuerung zyklisch ausgeführt. Kommentare sind mit "(*" und "*)" eingefasst.

```
(* evaluation nur bei der ersten Ausführung *)
If FirstScan() Then
      (* initialisiere CPU parameter *)
      CPU_This := PromptForInput("Geben Sie die CPU-Nummer ein: ", Integer)
      CPU_Low     := (<CPU_This>=1)+1
      CPU_High:= (<CPU_This>#3)+2


      (* initialisiere hook-up parameter *)
      Hookup_for_1   := <CPU_This>=3
      Hookup_for_2   := <CPU_This>#1
      Hookup_for_3   := 1


      (* initialisiere Kommunikationsparameter *)
      from_Low          := CPU<CPU_Low>_CPU<CPU_This>_Value25
      :

      :

      (* initialisiere berechnete Parameter *)
      P_measurement := P_myPump & 10 * <CPU_This> + <CPU_This> + 1
```

```
            :

            :

      (* initialisiere hook-up parameter *)

      Hookup_of_ P_measurement  := <Hookup_for_3>

      Hookup_of_myPump    := <Hookup_for_2>

      Hookup_of_Speed       := <Hookup_for_3>


      (* initialisiere array -Parameter *)

      P_myPump[1]    := P_myPump_Oben

      P_myPump[2]    := P_myPump_Mitte

      P_myPump[3]    := P_myPump_Unten

End if


(* zyklisch ausgeführte Regelung *)

If Hookup_of_ P_measurement = 1 Then

      (* P_measurement als angeschlossene Messung verarbeiten *)

Else

      (* P_measurement als nicht direkt angeschlossene Messung verarbeiten *)

End if
```

Prinzipiell ist es auch möglich ohne Verwendung von Zwischenvariablen die Programmvariablen im ganzen Programm, insbesondere im zyklisch ausgeführten Programmabschnitt in parametrisierter Form zu verwenden.

In einer bevorzugten Variante der Erfindung ist ein Redundanzgrad von Sensoren oder Aktoren als Parameter vorgebbar und evaluierbar. Bei einer Ausführung eines Moduls werden beispielsweise nach Massgabe eines Redundanzgrades eines Sensors zwei oder drei Messwerte miteinander verglichen oder gemittelt. Dazu ist erforderlich, dass Programmvariablen, unter denen Sensoren ansprechbar sind, vorgegebenen Konventionen gehorchen, so dass eine Referenz zu einem Sensor, also eine Programmvariable, welche einen Sensorwert zugewiesen erhält, automatisch erzeugbar ist. Gleiches gilt für Aktoren und Kommunikationsverbindungen.

In einer weiteren bevorzugten Variante der Erfindung ist parametrisiert, durch welche Datenverarbeitungseinheit Werte bestimmter Sensoren in Abhängigkeit des Redundanzgrades der Sensoren ausgewertet werden. Beispielsweise werden in einem dreifachredundanten System Werte von Sensoren, welche aus Kostengründen nur zweifachredundant ausgeführt sind, immer durch die zweite und die dritte Datenverarbeitungseinheit 12,13 ausgewertet. Nur einfach vorhandene Sensoren sind mit der dritten Datenverarbeitungseinheit 13 verbunden.

Entsprechende Hilfsparameter sind

```
Hookup_for_1 :=    <CPU_This>=3
Hookup_for_2 :=    <CPU_This>#1
Hookup_for_3 :=    1
```

Für jede Gruppe von redundanten Sensoren oder Aktoren ist eine entsprechende Programmvariable definiert, welche die Anzahl angeschlossener Sensoren respektive Aktoren angibt:

```
Hookup_of_T_H2O :=     <Hookup_for_1>
Hookup_of_myPump :=    <Hookup_for_2>
```

Hookup_of_Speed :=        <Hookup_for_3>

Diese Programmvariablen erhalten also für jeweils das k-te Modul die folgenden Werte

| k | 1 | 2 | 3 |
|---|---|---|---|
| Hookup_of_T_H2O | 0 | 0 | 1 |
| Hookup_of_myPump | 0 | 1 | 1 |
| Hookup_of_Speed | 1 | 1 | 1 |

Dies bedeutet, dass gemäss Hookup_of_T_H2O eine bestimmte Wassertemperaturmessung mit der ersten Datenverarbeitungseinheit verbunden ist, zwei bestimmte redundante Pumpen jeweils mit der ersten respektive der zweiten Datenverarbeitungseinheit, und drei bestimmte redundante Geschwindigkeitssensoren jeweils mit der einer der drei Datenverarbeitungseinheiten verbunden sind. "Verbunden" bedeutet in diesem Zusammenhang, dass der Sensor physisch mit dieser Datenverarbeitungseinheit respektive dem entsprechenden Leitgerät verbunden ist.

In jedem Modul ist also durch Evaluation dieser Programmvariablen die Programmausführung daran anpassbar, ob überhaupt ein bestimmter Sensor oder Aktor angeschlossen ist, und ob gegebenenfalls eine Abstimmung mit Werten oder Resultaten aus einem oder zwei anderen Modulen erforderlich ist.

Ist zum Beispiel die Umgebungstemperatur nur als einfacher Sensor vorhanden und physisch mit der dritten Datenverarbeitungseinheit 13 verbunden, so wird dies dem Computerprogrammmodul mit der Parameterzuweisung Hookup_of_T_Amb := <CH_This>=3 angezeigt. In Abhängigkeit dieser Variablen kann nun die Auswertung in den verschiedenen Datenverarbeitungseinheiten erfolgen, wie im obigen Code-Beispiel gezeigt.

Die dritte Datenverarbeitungseinheit 13 liest die Umgebungstemperatur in diesem Falle von der physischen Verbindung zum angeschlossenen Sensor, macht die zur Umgebungstemperatur gehörenden Berechnungen und kommuniziert die Berechnungsresultate. Zusätzlich kommuniziert die Datenverarbeitungseinheit 13 die Umgebungstemperatur zu den ersten und zweiten Datenverarbeitungseinheiten 11 und 12.

Die ersten und zweiten Datenverarbeitungseinheiten 11 und 12 lesen hingegen die Umgebungstemperatur von der dritten Datenverarbeitungseinheit 13, da der Sensor nicht direkt an die ersten und zweiten Datenverarbeitungseinheiten 11 und 12 angeschlossen ist. Auch sie machen die zur Umgebungstemperatur gehörenden Berechnungen und kommunizieren die Berechnungsresultate.

Im erfinderischen Verfahren werden die parametrisierten Programmvariablen eines generischen Computerprogrammmoduls nach Massgabe des Parameters k automatisch durch nichtparametrisierte oder konkrete Programmvariablen ersetzt. Verfahren zur Evaluation von parametrisierten Ausdrücken sind in bestehenden Compilern, Präcompilern, Interpretern, etc. implementiert und allgemein bekannt. Bei einer Programmierung eines Computerprogramms zur Ausführung des erfindungsgemässen Verfahrens kann also auf bekannte Evaluationsverfahren zurückgegriffen werden.

In einer ersten bevorzugten Variante der Erfindung wird das erfinderische Verfahren "offline" n mal wiederholt für verschiedene Werte von k ausgeführt. Das generische Computerprogrammmodul wird durch ein Konversionsprogramm gemäss der Erfindung gelesen und es werden n Module erzeugt und auf eines oder mehrere Speichermedien geschrieben. Diese gespeicherten Module werden auf die Datenverarbeitungseinheiten 11,12,13 geladen. Ein k-tes Modul wird also auf eine zugeordnete k-te Datenverarbeitungseinheit geladen. Es werden dazu mehrere unterschiedliche Varianten von Modulen einzeln zu den jeweiligen Leitgeräten respektive Datenverarbeitungseinheiten übermittelt und auf diese geladen. Je nach Art des Leitsystems werden redundante Computerprogrammmodule vor oder nach dem Laden kompiliert oder in ähnlicher Weise konvertiert.

In einer zweiten bevorzugten Variante der Erfindung wird das erfinderische Verfahren beim Laden des generischen Computerprogrammmoduls auf eine Datenverarbeitungseinheit 11,12,13 des Leittechnikgeräts ausgeführt oder bei einer Ausführung des generischen Computerprogrammmoduls durch einen auf der Datenverarbeitungseinheit 11,12,13 laufenden Interpreter ausgeführt. Dabei wird im generischen Computerprogrammmodul vor oder beim Laden entweder nur der Parameter k, welcher die konkrete Datenverarbeitungseinheit identifiziert, manuell angepasst, oder das generische Computerprogrammmodul ermittelt anhand einer Abfrage eines Benutzers oder einer Hardwareidentifikation der Datenverarbeitungseinheit 11,12,13 selber, auf welcher Datenverarbeitungseinheit es sich befindet und welchem Wert von k dies entspricht. Bei dieser Variante wird nur eine Programmvariante, nämlich die generische, übermittelt.

**Bezugszeichenliste**

| | |
|---|---|
| 11 | erste Datenverarbeitungseinheit |
| 12 | zweite Datenverarbeitungseinheit |
| 13 | dritte Datenverarbeitungseinheit |
| 21,22 | erste Sensoren |
| 31,32,33 | zweite Sensoren |
| 41,42,43 | Kommunikationsverbindungen |
| 5 | Aktor oder Schutzgerät |

**Patentansprüche**

1. Verfahren zur Erzeugung von einem von n redundanten Computerprogrammmodulen zur Programmierung von einer von n redundanten Datenverarbeitungseinheiten (11,12,13) eines Leitsystems, wobei $n \geq 2$ ist und jedes der redundanten Computerprogrammmodule zur Ausführung auf einer jeweils zugeordneten Datenverarbeitungseinheit (11,12,13) vorgesehen ist, **dadurch gekennzeichnet,**
   **dass** das Verfahren von einem generischen Computerprogrammmodul ausgeht, welches Programmanweisungen mit parametrisierten Programmvariablen aufweist,
   **dass** ein Wert eines Parameters k mit $1 \leq k \leq n$ bestimmt wird, und
   **dass** ein k-tes redundantes Computerprogrammmodul erzeugt wird, indem die parametrisierten Programmvariablen nach Massgabe des Wertes von k automatisch durch nichtparametrisierte Programmvariablen ersetzt werden.

2. Verfahren gemäss Anspruch 1, **dadurch gekennzeichnet, dass** die Erzeugung eines k-ten redundanten Computerprogrammmoduls n mal wiederholt für k= 1,2, ... n ausgeführt wird.

3. Verfahren gemäss Anspruch 1, **dadurch gekennzeichnet, dass** das Verfahren beim Laden des generischen Computerprogrammmoduls in das Leittechnikgerät ausgeführt wird.

4. Verfahren gemäss Anspruch 1, **dadurch gekennzeichnet, dass** das erzeugte redundante Computerprogrammmodul in eine Datenverarbeitungseinheit (11,12,13) eines k-ten Leittechnikgeräts von insgesamt n Leittechnikgeräten geladen wird.

5. Computerprogrammprodukt zur Erzeugung eines von n redundanten Computerprogrammmodulen zur Programmierung von einer von n redundanten Datenverarbeitungseinheiten (11,12,13) eines Leitsystems, wobei $n \geq 2$ ist und jedes der redundanten Computerprogrammmodule zur Ausführung auf einer jeweils zugeordneten Datenverarbeitungseinheit (11,12,13) vorgesehen ist, welches Computerprogrammprodukt in einen internen Speicher eines digitalen Datenverarbeitungsmittels ladbar ist und Computerprogrammcodemittel aufweist, die, wenn sie in einer Datenverarbeitungseinheit geladen und ausgeführt werden, die Datenverarbeitungseinheit zur Ausführung des Verfahren mit den folgenden Schritten bringt:

   - Lesen eines generischen Computerprogrammmoduls, welches Programmanweisungen mit parametrisierten Programmvariablen aufweist,
   - Bestimmen eines Wertes eines Parameters k mit $1 \leq k \leq n$, und
   - Erzeugen eines k-ten redundanten Computerprogrammmoduls, indem die parametrisierten Programmvariablen nach Massgabe des Wertes von k automatisch durch nichtparametrisierte Programmvariablen ersetzt werden.

6. Computerprogrammprodukt zur Repräsentation eines generischen Computerprogrammmoduls, welches in einen internen Speicher eines digitalen Datenverarbeitungsmittels ladbar ist und Computerprogrammcodemittel aufweist, welche parametrisierbare Programmvariablen repräsentieren, die zur Erzeugung von einem von n redundanten Computerprogrammmodulen nach Massgabe eines Parameters durch nichtparametrisierte Programmvariablen automatisch ersetzbar sind, wobei $n \geq 2$ ist und die n redundanten Computerprogrammmodule zur Programmierung von n redundanten Datenverarbeitungseinheiten (11,12,13) eines Leitsystems vorgesehen sind, wobei jedes der redundanten Computerprogrammmodule zur Ausführung auf einer jeweils zugeordneten Datenverarbeitungseinheit (11,12,13) vorgesehen ist.

**Europäisches Patentamt**

**EUROPÄISCHER RECHERCHENBERICHT**

Nummer der Anmeldung

EP 01 81 0384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 553 205 A (PORCHIA SALVATORE) 12. November 1985 (1985-11-12) * Spalte 1, Zeile 33 – Spalte 2, Zeile 35 * | 1-6 | G06F9/45 G06F9/44 G06F11/18 |
| A | "DEFENSIVE PROGRAMMING SIMPLIFIES PROGRAM MAINTENANCE" EDN ELECTRICAL DESIGN NEWS, CAHNERS PUBLISHING CO. NEWTON, MASSACHUSETTS, US, Bd. 31, Nr. 16, 7. August 1986 (1986-08-07), Seiten 157-160, XP000717367 ISSN: 0012-7515 * Seite 160, linke Spalte, Zeile 4-14 * | 1-6 | |

| | | RECHERCHIERTE SACHGEBIETE (Int.Cl.7) |
|---|---|---|
| | | G06F |

Der vorliegende Recherchenbericht wurde für alle Patentansprüche erstellt

| Recherchenort | Abschlußdatum der Recherche | Prüfer |
|---|---|---|
| DEN HAAG | 21. September 2001 | Huyghe, E |

**ANHANG ZUM EUROPÄISCHEN RECHERCHENBERICHT
ÜBER DIE EUROPÄISCHE PATENTANMELDUNG NR.**

EP 01 81 0384

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-2001

| Im Recherchenbericht angeführtes Patentdokument | Datum der Veröffentlichung | Mitglied(er) der Patentfamilie | Datum der Veröffentlichung |
|---|---|---|---|
| US 4553205 A | 12-11-1985 | KEINE | |

EPO FORM P0461

Für nähere Einzelheiten zu diesem Anhang : siehe Amtsblatt des Europäischen Patentamts, Nr.12/82